# EUROPEAN PATENT APPLICATION

(11) **EP 4 089 554 A1**
(43) Date of publication of application: **16.11.2022**
(21) Application number: 20911607.8
(22) Date of filing: 17.11.2020
(51) Int. Cl.: G06F 21/31, G06F 21/44, G06F 21/62, H04L 9/32

(54) **AUTHENTICATION SYSTEM, REMOTE MANAGEMENT SYSTEM, AND MANAGEMENT METHOD**

(30) Priority: 08.01.2020 JP 2020001681
(71) Applicant: Daikin Industries, Ltd., Osaka-shi, Osaka 530-8323 (JP)
(72) Inventor: NAKAYAMA, Kazuki, Osaka-shi, Osaka 530-8323 (JP); YOBIMOTO, Fumikazu, Osaka-shi, Osaka 530-8323 (JP)
(74) Representative: Global IP Europe Patentanwaltskanzlei
(86) International application number: PCT/JP2020/042827
(87) International publication number: WO 2021/140749

(57) **Abstract**

There is a system in which a device is operable from a user terminal having an operation application installed therein by permitting the user terminal to operate the device. However, in such a system, for example, even a user terminal located far from the device can operate the device. An authentication system (30) acquires, as authentication information, information related to a device (10), information related to a user or information related to a user terminal (20), and information indicating that the user or the user terminal (20) is in the vicinity of the device (10). The authentication system (30) performs authentication of the acquired authentication information. The authentication system (30) permits the user for whom or the user terminal (20) for which the authentication is successful to manage the device (10).

## Description

### TECHNICAL FIELD

The present disclosure relates to an authentication system, a remote management system, and a management method.

### BACKGROUND ART

In the related art, there is a remote management system in which a device that is a management target is operable with a user terminal or the like. PTL 1 (Japanese Unexamined Patent Application Publication No. 2015-224858) discloses an air conditioning system that improves user convenience by permitting a user terminal to operate a device.

### SUMMARY OF INVENTION

### <Technical Problem>

PTL 1 discloses that the user terminal having an operation application installed therein is permitted to operate the device, so that the device is operable from the user terminal. However, in such a system, for example, even a user terminal located far from the device can operate the device.

### <Solution to Problem>

An authentication system according to a first aspect is configured to acquire, as authentication information, information related to a device, information related to a user or information related to a user terminal, and information indicating that the user or the user terminal is in a vicinity of the device. The authentication system is configured to perform authentication of the acquired authentication information. The authentication system is configured to permit the user for whom or the user terminal for which the authentication is successful to manage the device.

Thus, authentication of a user terminal located far from the device can be restricted so as not to permit such a user terminal to manage the device.

An authentication system according to a second aspect is the system according to the first aspect configured to store the information related to the device and information on a management right for the device in association with each other. The information on the management right for the device sets the user or the user terminal permitted to manage the device.

An authentication system according to a third aspect is the system according to the first aspect or the second aspect configured to store the information related to the user or the user terminal and information on a management right given to the user or the user terminal in association with each other. The information on the management right given to the user or the user terminal sets a range which the user or the user terminal is permitted to manage.

A remote management system according to a fourth aspect includes a device, a user terminal, and a management apparatus. The device or the user terminal is configured to transmit authentication information to the management apparatus. The management apparatus is configured to determine whether or not to permit a user or the user terminal to manage the device, in response to receiving the authentication information. The authentication information includes first authentication information, second authentication information, and third authentication information. The first authentication information is information related to the device. The second authentication information is information related to the user or information related to the user terminal. The third authentication information is information indicating that the user or the user terminal is in a vicinity of the device.

Thus, authentication of a user terminal located far from the device can be restricted so as not to permit such a user terminal to manage the device.

A remote management system according to a fifth aspect is the system according to the fourth aspect, in which the third authentication information is transmitted from the device to the user terminal by short-range wireless communication. The management apparatus is configured to acquire an encryption key for use in authentication of the third authentication information and perform the authentication to determine whether or not to permit the user or the user terminal to manage the device.

Thus, authentication of the user terminal located far from the device can be restricted.

A remote management system according to a sixth aspect is the system according to the fourth aspect, in which the third authentication information is transmitted from the user terminal to the device by short-range wireless communication. The management apparatus is configured to acquire an encryption key for use in authentication of the third authentication information and perform the authentication to determine whether or not to permit the user or the user terminal to manage the device.

Thus, authentication of the user terminal located far from the device can be restricted.

A remote management system according to a seventh aspect is the system according to the fifth aspect or the sixth aspect, in which the third authentication information includes an authentication key set for each device. The management apparatus and the device are configured to share the authentication key.

Thus, authentication of the user terminal located far from the device can be restricted.

A remote management system according to an eighth aspect is the system according to the fifth aspect or the sixth aspect, in which the third authentication information includes an authentication key set for each user or each user terminal. The management apparatus and the user terminal are configured to share the authentication key.

Thus, authentication of the user terminal located far from the device can be restricted.

A remote management system according to a ninth aspect is the system according to the seventh aspect or the eighth aspect, in which the authentication key is updated every predetermined time.

Thus, authentication of the user terminal located far from the device can be restricted.

A remote management system according to a tenth aspect is the system according to any of the fourth aspect to the ninth aspect, in which the third authentication information includes time information that is information on either a time of short-range wireless communication performed by the device and the user terminal or a reception time of the authentication information by the management apparatus.

Thus, authentication of the user terminal located far from the device can be restricted.

A remote management system according to an eleventh aspect is the system according to any of the fourth aspect to the tenth aspect, in which the management apparatus is configured to store a location of the user or the user terminal, based on the received authentication information.

Thus, the location of the user or the user terminal can be grasped by using the remote management system.

A remote management system according to a twelfth aspect is the system according to any of the fourth aspect to the eleventh aspect, in which in a case where the user terminal receives pieces of the authentication information from a plurality of the devices by short-range wireless communication, the user terminal is configured to select the authentication information, based on a radio field intensity in the short-range wireless communication.

Thus, the user can operate the device that is at a location closest to the user terminal.

A remote management system according to a thirteenth aspect is the system according to any of the fourth aspect to the twelfth aspect, in which the management apparatus is configured to store the first authentication information and information on a management right for the device in association with each other, and the information on the management right for the device sets the user or the user terminal permitted to manage the device.

A remote management system according to a fourteenth aspect is the system according to any of the fourth aspect to the thirteenth aspect, in which the management apparatus is configured to store the second authentication information and information on a management right given to the user or the user terminal in association with each other. The information on the management right given to the user or the user terminal sets a range which the user or the user terminal is permitted to manage.

A remote management system according to a fifteenth aspect is the system according to the fourteenth aspect, in which the device includes a plurality of groups of devices. The information on the management right given to the user or the user terminal sets a group of the devices which the user or the user terminal is permitted to manage among the plurality of groups of the devices.

A remote management system according to a sixteenth aspect is the system according to the fourteenth aspect or the fifteenth aspect, in which the user terminal is configured to display, to the user, the information on the management right given to the user or the user terminal, in response to the management apparatus determining to permit management of the device.

A remote management system according to a seventeenth aspect is the system according to any of the fourth aspect to the sixteenth aspect, in which the vicinity of the device is a range in which the user terminal is capable of transmitting or receiving a communication signal to or from the device.

A remote management system according to an eighteenth aspect is the system according to any of the fourth aspect to the seventeenth aspect, in which the vicinity of the device is a range in which the user terminal is capable of performing short-range wireless communication with a communication signal to the device.

A management method according to a nineteenth aspect is a management method in a management apparatus configured to manage a device by using a user terminal. The management method includes a storing step, a sharing step, a receiving step, an authenticating step, and a determining step. In the storing step, the management apparatus stores first authentication information, second authentication information, an authentication key, and an encryption key. In the sharing step, the management apparatus shares the authentication key and the encryption key with the device. In the receiving step, the management apparatus receives the first authentication information, the second authentication information, and third authentication information. The third authentication information includes the authentication key encrypted in the user terminal or the device and time information. In the authenticating step, the management apparatus performs authentication of the encrypted authentication key received in the receiving step, by using the encryption key stored in the storing step. In the determining step, the management apparatus determines whether or not to permit the user terminal to manage the device, based on the authenticating step. The first authentication information is information related to the device. The second authentication information is information related to the user terminal or information related to a user who uses the user terminal. The third authentication information is information indicating that the user terminal or the user is in a vicinity of the device.

Thus, authentication of a user terminal located far from the device can be restricted so as not to permit such a user terminal to manage the device.

### BRIEF DESCRIPTION OF DRAWINGS

Fig. 1 is a schematic diagram illustrating a configuration of a remote management system.
Fig. 2 is a block diagram illustrating a configuration of the remote management system.
Fig. 3 is a flowchart illustrating a process of the remote management system.
Fig. 4 is a flowchart illustrating a process of a second remote management system.

### DESCRIPTION OF EMBODIMENTS

A remote management system according to a first embodiment of the present disclosure will be described below. Note that the embodiment below presents a specific example and does not intend to limit the technical scope, and thus may be appropriately modified within a scope not departing from the gist.

### (1) Overall Configuration

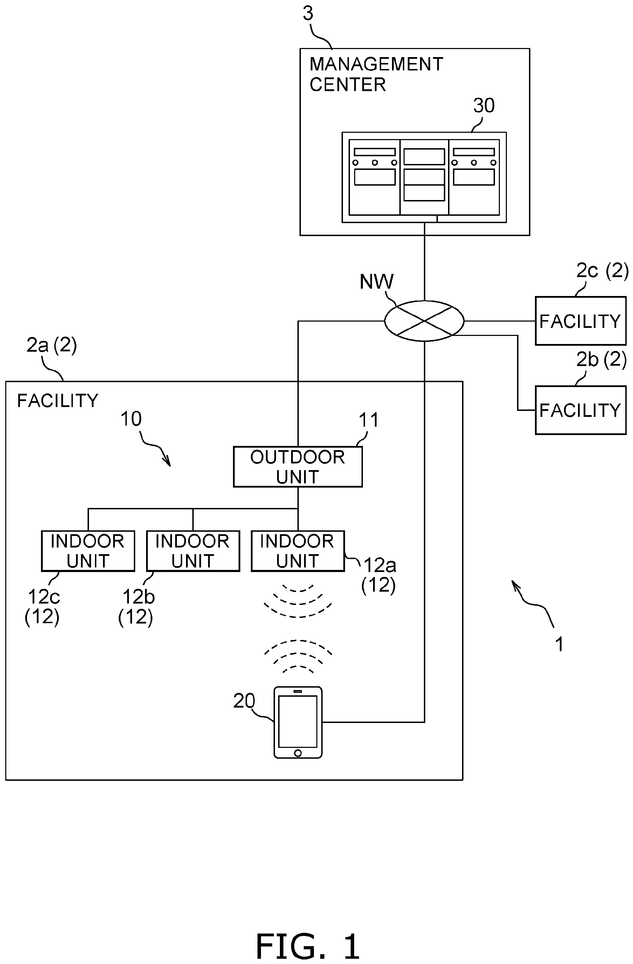

Fig. 1 is a schematic diagram illustrating a configuration of a remote management system 1 according to an embodiment of the present disclosure. In description below, when common description is given of a plurality of apparatuses having substantially the same functions, the description is given by assigning the same reference sign to the apparatuses. When description is given of one apparatus with being distinguished from the plurality of apparatuses having substantially the same function, the description is given by adding a suffix of a lower-case alphabet. For example, since indoor units 12a to 12c are apparatuses having substantially the same function, the indoor units 12a to 12c are referred to as indoor units 12 when the description is common. For convenience of description, suffixes such as a to c are used. However, these represent an arbitrary number, and a quantity is not limited to this.

The remote management system 1 is a system in which one management apparatus 30 manages many devices. Herein, the management apparatus 30 is installed at a central management center 3. Many facilities 2 (2a to 2c) are present in a management area of the central management center 3. The facilities 2 are, for example, office buildings, commercial buildings, and condominiums. In each of the facilities 2, one or a plurality of air conditioners 10 are installed as examples of devices that are management targets. The air conditioners 10 are connected to the management apparatus 30 via a communication network NW and are capable of transmitting and receiving various kinds of information. In addition, the air conditioners 10 are capable of transmitting and receiving various kinds of information to and from a user terminal 20 by short-range wireless communication. The user terminal 20 is carried by a user and is capable of performing short-range wireless communication with the air conditioner(s) 10 in a predetermined distance range. The user terminal 20 is also connected to the management apparatus 30 via the communication network NW, and is capable of transmitting and receiving various kinds of information.

The remote management system 1 is a system in which each of the air conditioners 10, the user terminal 20, and the management apparatus 30 transmit and receive various kinds of information, so that the management apparatus 30 performs authentication of the user terminal 20 and manages the air conditioner 10 via the user terminal 20.

The authentication of the user terminal 20 is performed by determining whether or not first authentication information that is information related to the device, second authentication information that is information related to the user terminal 20, and third authentication information that is information indicating that the user terminal 20 is in the vicinity of the air conditioner 10 (device), which are received by the management apparatus 30 via the communication network NW, match information stored in the management apparatus 30. Herein, the first authentication information, the second authentication information, and the third authentication information are referred to as authentication information.

In response to the user terminal 20 being authenticated by the management apparatus 30, the user terminal 20 is permitted to manage the air conditioner 10.

### (2) Device

Hereinafter, an "air conditioner" that performs cooling or heating of a target space will be described as an example of a device that is a management target of the remote management system 1 according to the present embodiment. However, the management target of the remote management system 1 according to the present embodiment is not limited to the air conditioner. For example, a ventilator, a humidity conditioner, and/or any of other refrigeration apparatuses may be adopted as the "device".

The air conditioner 10 includes a refrigerant circuit constituted by a compressor not illustrated, a heat exchanger not illustrated, and so on. The air conditioner 10 includes an outdoor unit 11 and the plurality of indoor units 12 (12a to 12c). The outdoor unit 11 and each of the indoor units 12 are connected through a dedicated communication line. The air conditioner 10 includes a processor such as a CPU that implements various functions as an outdoor unit controller or an indoor unit controller, a memory device such as a RAM or a ROM, an interface with an external device, and so on.

Various sensors not illustrated are appropriately installed at predetermined locations in the air conditioner 10. With these sensors, a room temperature, an ambient outdoor air temperature, states of the air conditioner 10 such as a temperature and a pressure of refrigerant sucked to a compressor, a temperature and a pressure of the refrigerant discharged from the compressor, a temperature of the refrigerant in an evaporator, and a temperature of the refrigerant in a condenser can be detected. The air conditioner 10 is operated based on control information input from a remote control, an operation panel, and/or the like, control information transmitted from the management apparatus 30 via the communication network NW, or control information transmitted from the authenticated user terminal 20 by short-range wireless communication.

The outdoor unit 11 is a device that is installed, for example, on a rooftop, in a basement, or the like and that functions as a heat source of the refrigerant circuit. The outdoor unit 11 is equipped with a connection interface for connecting to the communication network NW via an edge, a router, or the like. The outdoor unit 11 is connected to the communication network NW via the connection interface and thus is capable of communicating with the management apparatus 30.

Each of the indoor units 12 is installed on a ceiling of a room or the like in the facility 2, for example, and includes a remote control, an operation panel installed in the room, and the like. The indoor units 12a to 12c may be installed on a plurality of floors, in a plurality of rooms, or the like in the facility 2 in a distributed manner. Each of the indoor units 12 is equipped with an antenna for performing short-range wireless communication with the user terminal 20.

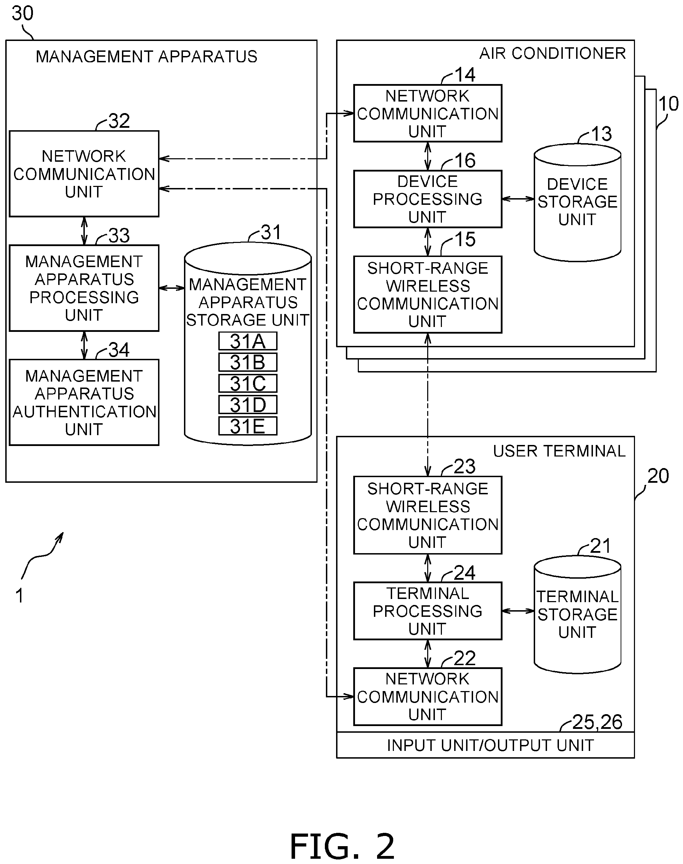

As illustrated in Fig. 2, the air conditioner 10 includes a device storage unit 13, a network communication unit 14, a short-range wireless communication unit 15, and a device processing unit 16 as functional units. These functional units are implemented by the functions of the outdoor unit controller and the indoor unit controller.

The device storage unit 13 stores various kinds of information, and stores programs for executing various functions of the air conditioner 10. For example, the device storage unit 13 stores an authentication program that contributes to a process of authenticating the user terminal 20 in the management apparatus 30.

The device storage unit 13 stores device information (first authentication information) that is information related to the air conditioner 10. The device information is, for example, information such as a device ID, a network address, and location information of the air conditioner 10 or the indoor unit 12, and thus is information specific to each air conditioner 10 or each indoor unit 12. The device information is registered (stored) in the management apparatus 30 in advance at the time of initial work or the like performed when the air conditioner 10 is installed in the facility 2.

The device storage unit 13 also stores an authentication key and an encryption key shared with the management apparatus 30. The authentication key is, for example, a character string set for each indoor unit 12. The encryption key is, for example, a hash function. The authentication key is encrypted by using the encryption key. The authentication key and the encryption key are received from the management apparatus 30 via the communication network NW and are stored in the device storage unit 13. In this manner, the authentication key and the encryption key are shared.

The network communication unit 14 performs communication with the management apparatus 30 via the communication network NW. Various kinds of information are exchanged between the air conditioner 10 and the management apparatus 30 by the function of the network communication unit 14. For example, the network communication unit 14 receives the authentication key and the encryption key from the management apparatus 30.

The short-range wireless communication unit 15 performs communication with the user terminal 20 by short-range wireless communication. Various kinds of information are exchanged between the air conditioner 10 and the user terminal 20 by the function of the short-range wireless communication unit 15. For example, the short-range wireless communication unit 15 receives an information transmission request from the user terminal 20 and transmits various kinds of information based on the information transmission request.

The device processing unit 16 performs various kinds of information processing. For example, the device processing unit 16 acquires the authentication key and the hash function from the management apparatus 30 via the network communication unit 14, and stores the authentication key and the hash function in the device storage unit 13. In response to the short-range wireless communication unit 15 receiving the information transmission request from the user terminal 20, the device processing unit 16 performs a process of encrypting the authentication key by using the encryption key. Based on the information transmission request, the device processing unit 16 transmits the device information, the encrypted authentication key, and time information to the user terminal 20 via the short-range wireless communication unit 15. The time information is, for example, information on a reception time of the information transmission request by the air conditioner 10 from the user terminal 20. Alternatively, the time information is, for example, information on a transmission time of the information transmission request by the user terminal 20 to the air conditioner 10.

### (3) User Terminal

The user terminal 20 is connected to the management apparatus 30 via the communication network NW. The user terminal 20 is a terminal that is authenticated by the management apparatus 30 to be permitted to operate the air conditioner 10. The user terminal 20 is, for example, a smartphone, a tablet device, a personal computer, or the like.

As illustrated in Fig. 2, the user terminal 20 includes a terminal storage unit 21, a network communication unit 22, a short-range wireless communication unit 23, a terminal processing unit 24, a terminal input unit 25, and a terminal output unit 26.

The terminal storage unit 21 stores various kinds of information and includes a ROM, a RAM, a hard disk, and/or the like. The terminal storage unit 21 stores programs for executing various functions of the user terminal 20. For example, the terminal storage unit 21 includes an authentication program that contributes to a process of authenticating the user terminal 20 in the management apparatus 30.

The terminal storage unit 21 also stores terminal information (second authentication information) that is information related to the user terminal 20. The terminal information is, for example, information such as a terminal ID or a network address of the user terminal 20 and thus is information specific to the user terminal 20. The terminal information is registered (stored) in the management apparatus 30 in advance in initial work or the like.

The network communication unit 22 performs communication with the management apparatus 30 via the communication network NW. Various kinds of information are exchanged between the user terminal 20 and the management apparatus 30 by the function of the network communication unit 22. For example, the network communication unit 22 transmits authentication information described later to the management apparatus 30.

The short-range wireless communication unit 23 performs communication with the air conditioner 10 by short-range wireless communication. Various kinds of information are exchanged between the user terminal 20 and the air conditioner 10 by the function of the short-range wireless communication unit 23.

The terminal processing unit 24 performs various kinds of information processing in the user terminal 20, and is constituted by a CPU, a cache memory, and so on. For example, the terminal processing unit 24 transmits an transmission request for various kinds of information to the air conditioner 10 via the short-range wireless communication unit 23. The terminal processing unit 24 transmits the authentication information to the management apparatus 30 via the network communication unit 22.

The terminal input unit 25 is an interface for inputting information to the user terminal 20. For example, the terminal input unit 25 is implemented by a touch screen, a keyboard, a mouse, and/or the like. The terminal input unit 25 is capable of inputting control information in response to the user terminal 20 being authenticated by the management apparatus 30, for example.

The terminal output unit 26 outputs various kinds of information, and is constituted by a display of various kinds, a speaker, or the like. For example, the terminal output unit 26 outputs an input screen or the like for receiving input of various kinds of information. The terminal output unit 26 is capable of outputting the state of the air conditioner 10 in response to the user terminal 20 being authenticated by the management apparatus 30, for example.

### (4) Management Apparatus

The management apparatus 30 is connected to each of the air conditioners 10 and the user terminal 20 via the communication network NW and manages the plurality of air conditioners 10. The management apparatus 30 is a computer that manages the air conditioners 10, and is, for example, a supercomputer, a workstation, a personal computer, a tablet device, a smartphone, or the like. For example, the management apparatus 30 may also be constituted by a plurality of computers or devices connected to each other via a network.

As illustrated in Fig. 2, the management apparatus 30 includes a management apparatus storage unit 31, a network communication unit 32, a management apparatus processing unit 33, and a management apparatus authentication unit 34.

The management apparatus storage unit 31 stores various kinds of information and includes a ROM, a RAM, a hard disk, and/or the like. Herein, the management apparatus storage unit 31 includes a device information management apparatus storage unit 31A, a terminal information management apparatus storage unit 31B, an authentication key management apparatus storage unit 31C, an encryption key management apparatus storage unit 31D, and a management right management apparatus storage unit 31E. The management apparatus storage unit 31 stores programs for executing various functions of the management apparatus 30. For example, the management apparatus storage unit 31 includes an authentication program for authenticating the user terminal 20 in the management apparatus 30.

The device information management apparatus storage unit 31A stores device information that is information related to the air conditioner 10 or the indoor unit 12. The device information management apparatus storage unit 31A can store device information of each of the plurality of air conditioners 10 installed in the management area of the central management center 3.

The terminal information management apparatus storage unit 31B stores terminal information that is information related to the user terminal 20. The terminal information management apparatus storage unit 31B can store terminal information of each of the plurality of user terminals 20.

The authentication key management apparatus storage unit 31C stores an authentication key corresponding to each of the air conditioners 10 or each of the indoor units 12. The authentication key is, for example, a character string encrypted by the encryption key, and is set for the air conditioner 10 or the indoor unit 12 in advance.

The encryption key management apparatus storage unit 31D stores the encryption key corresponding to each of the air conditioners 10 or each of the indoor units 12. The encryption key is, for example, a hash function for encrypting a character string serving as the authentication key, and is set in advance for the air conditioner 10 or the indoor unit 12.

The management right management apparatus storage unit 31E stores information related to a management right for the air conditioner 10 given to the user terminal 20. The information related to the management right is, for example, information on a device which, an area in which, and a time period in which the user terminal 20 is permitted to operate in response to the user terminal 20 being authenticated, and is set for each user terminal 20. That is, the information related to the management right for the air conditioner 10 stored in the management right management apparatus storage unit 31E is stored in association with the terminal information stored in the terminal information management apparatus storage unit 31B.

The network communication unit 32 is an interface for communicating with the air conditioner 10 and the user terminal 20. For example, the network communication unit 32 transmits the authentication key and the encryption key to the air conditioner 10. The network communication unit 32 also receives the authentication information from the user terminal 20.

The management apparatus processing unit 33 performs various kinds of information processing in the management apparatus 30 and is constituted by a CPU, a cache memory, and so on. For example, the management apparatus processing unit 33 performs a process of causing the management apparatus authentication unit 34 to perform authentication based on the authentication information received by the network communication unit 32. When the user terminal 20 is authenticated and it is determined that the user terminal 20 is permitted to manage the air conditioner 10, the management apparatus processing unit 33 gives a management right to the user terminal 20, based on the right information stored in the management right management apparatus storage unit 31E.

The management apparatus authentication unit 34 performs authentication of the user terminal 20, based on the information received from the user terminal 20. Specifically, the management apparatus 30 receives the device information as the first authentication information, the terminal information as the second authentication information, and the encrypted authentication key and time information as the third authentication information from the user terminal 20 via the communication network NW. The management apparatus authentication unit 34 performs the following determination based on these pieces of received information. The management apparatus authentication unit 34 determines whether or not the received device information matches device information stored in the device information management apparatus storage unit 31A. The management apparatus authentication unit 34 determines whether or not the received terminal information matches terminal information stored in the terminal information management apparatus storage unit 31B. The management apparatus authentication unit 34 determines whether or not the received encrypted authentication key matches information obtained by encrypting the authentication key stored in the authentication key management apparatus storage unit 31C by using the encryption key stored in the encryption key management apparatus storage unit 31D. The authentication key stored in the authentication key management apparatus storage unit 31C and the encryption key stored in the encryption key management apparatus storage unit 31D correspond to the air conditioner 10 indicated by the received device information. The management apparatus authentication unit 34 determines whether or not the time information associated with the encrypted authentication key is within a predetermined time period with respect to the current time information. In the above determination, if it is determined that all the pieces of information match, the management apparatus authentication unit 34 determines to permit the user terminal 20 to manage the air conditioner 10. In response to the management apparatus authentication unit 34 determining to permit the user terminal 20 to manage the air conditioner 10, the management right is given to the user terminal 20 based on the right information stored in the management right management apparatus storage unit 31E.

### (5) Process in Remote Management System 1

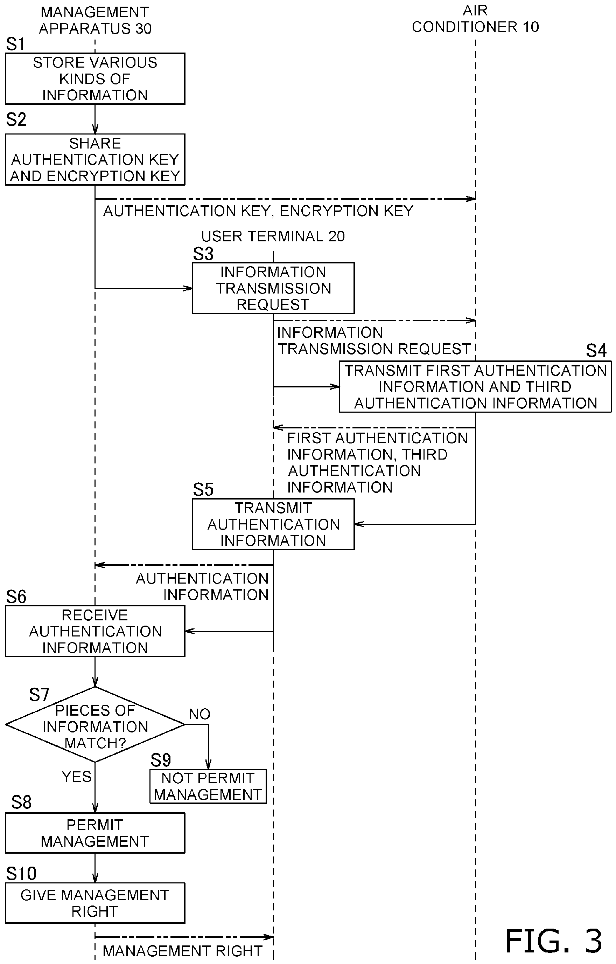

Fig. 3 is a flowchart for describing a flow of a process in the remote management system 1 according to the present embodiment. Fig. 3 illustrates a flow of the process in terms of a relationship among one air conditioner 10, one user terminal 20, and one management apparatus 30.

In the remote management system 1, the air conditioner 10, the user terminal 20, and the management apparatus 30 are all in operation, and the authentication program is executed in each of the air conditioner 10, the user terminal 20, and the management apparatus 30.

The management apparatus 30 stores the device information (first authentication information), the terminal information (second authentication information), the authentication key, the encryption key, and the information on the management right in advance therein (S1). Specifically, the device information management apparatus storage unit 31A of the management apparatus 30 stores the device information (first authentication information) of the air conditioner 10 in advance therein. The terminal information management apparatus storage unit 31B stores the terminal information (second authentication information) of the user terminal 20 therein. The authentication key management apparatus storage unit 31C stores a predetermined character string as the authentication key corresponding to the air conditioner 10 in advance therein. The encryption key management apparatus storage unit 31D stores a predetermined hash function as the encryption key corresponding to the air conditioner 10 in advance therein. The management right management apparatus storage unit 31E stores the information on the management right set for the user terminal 20 in advance therein.

In the remote management system 1, the air conditioner 10 and the management apparatus 30 communicate with each other via a network, and the management apparatus 30 transmits the authentication key and the encryption key stored therein to the air conditioner 10. Consequently, the authentication key and the encryption key are shared by the management apparatus 30 and the air conditioner 10 (S2). The air conditioner 10 stores the authentication key and the encryption key in the device storage unit 13.

The user carries the user terminal 20 and moves to the vicinity of the air conditioner 10 to be operated. The vicinity of the air conditioner 10 in the present disclosure is an area where the user terminal 20 can perform short-range wireless communication with the air conditioner 10. The short-range wireless communication is a communication method performed in accordance with, for example, Bluetooth (registered trademark), infrared communication, Wi-Fi (registered trademark) communication, or the like. That is, the vicinity of the air conditioner 10 is a range in which the user terminal 20 can transmit or receive a communication signal to or from the air conditioner 10. The user terminal 20 transmits the information transmission request to the air conditioner 10 by short-range wireless communication in the vicinity of the air conditioner 10 (S3).

Note that the vicinity of the air conditioner 10 may be a range in which a predetermined sound wave reaches. In this case, the vicinity of the air conditioner 10 is, for example, a range in which the user terminal 20 and the air conditioner 10 can transmit and receive an inaudible sound or the like.

The vicinity of the air conditioner 10 may also be a range involving the same temperature change. In this case, the vicinity of the air conditioner 10 is, for example, a range in which the user terminal 20 and the air conditioner 10 can sense the same temperature change.

In response to receiving the request from the user terminal 20, the air conditioner 10 first encrypts the authentication key by using the encryption key. Next, based on the request from the user terminal 20, the air conditioner 10 transmits the device information (first authentication information), the encrypted authentication key, and the time information on the reception time of the information transmission request by the air conditioner 10 by short-range wireless communication, to the user terminal 20 by short-range wireless communication (S4).

Herein, the encrypted authentication key and the time information are information (third authentication information) indicating that the user terminal 20 is in the vicinity of the air conditioner 10. That is, the fact that the user terminal 20 can receive information from the air conditioner 10 by short-range wireless communication indicates that the user terminal 20 is in the vicinity of the air conditioner 10. The time information indicates that the user terminal 20 is not far from the air conditioner 10 since the reception of the information.

In response to receiving the device information (first authentication information) and the information indicating that the user terminal 20 is in the vicinity of the air conditioner 10 (third authentication information), the user terminal 20 transmits, as authentication information, the received information and the terminal information (second authentication information) of itself to the management apparatus 30 (S5).

In response to the management apparatus 30 receiving the authentication information from the user terminal 20 (S6), the management apparatus authentication unit 34 of the management apparatus 30 determines whether or not the various kinds of information stored in the management apparatus storage unit 31 match the information received from the user terminal 20 (performs authentication) as described above (S7).

In the authentication described above (S7), if the various kinds of information stored in the management apparatus storage unit 31 match the information received from the user terminal 20, the management apparatus 30 determines to permit the user terminal 20 to manage the air conditioner 10 (S8).

On the other hand, in the above-described authentication (S7), if the various kinds of information stored in the management apparatus storage unit 31 do not match the information received from the user terminal 20, the management apparatus 30 determines not to permit the user terminal 20 to manage the air conditioner 10 (S9).

If determining to permit the user terminal 20 to manage the air conditioner 10 (S8), the management apparatus 30 gives the management right to the user terminal 20, based on the information on the management right stored in the management right management apparatus storage unit 31E (S10).

In response to the management right being given, the user terminal 20 can manage the air conditioner 10 in the range indicated by the management right. For example, the user terminal 20 can transmit the control information input from the terminal input unit 25, to the air conditioner 10 via the management apparatus 30. The user terminal 20 can also receive information such as the state of the air conditioner 10 via the management apparatus 30 and output the information to the terminal output unit 26.

### (6) Features

(6-1)
The remote management system 1 of the present disclosure includes the air conditioner 10, the user terminal 20, and the management apparatus 30. The user terminal 20 transmits authentication information to the management apparatus 30. In response to receiving the authentication information, the management apparatus 30 determines whether or not to permit the user terminal 20 to manage the air conditioner 10. The authentication information includes first authentication information, second authentication information, and third authentication information. The first authentication information is information related to the air conditioner 10. The second authentication information is information related to the user terminal 20. The third authentication information is information indicating that the user terminal 20 is in the vicinity of the air conditioner 10. The third authentication information includes an authentication key set for each air conditioner 10. The management apparatus 30 and the air conditioner 10 share the authentication key. The third authentication information also includes information on a time of short-range wireless communication performed by the air conditioner 10 and the user terminal 20.

In the remote management system 1 described in the present disclosure, the management apparatus 30 functions as an authentication system 30. That is, the management apparatus 30 acquires, as the authentication information, the first authentication information related to the air conditioner 10, the second authentication information related to the user terminal 20, and the third authentication information indicating that the user terminal 20 is in the vicinity of the air conditioner 10. Then, the management apparatus 30 performs authentication of the acquired authentication information, and permits the user terminal 20 for which the authentication is successful to manage the air conditioner 10.

Thus, authentication of the user terminal 20 located far from the air conditioner 10 can be restricted so as not to permit such a user terminal 20 to manage the air conditioner 10.

Specifically, in a system of the related art, a user terminal is permitted to operate an air conditioner in response to installation of an application therein or the like. However, in such a system, if a user carries the user terminal, an operation from a distance is possible. Thus, an operation inappropriate for a person who is actually using the air conditioner may be performed. In such an apparatus, a malicious third party can intercept a radio wave for operating the air conditioner or emit a radio wave for performing a malicious operation.

To authenticate the user terminal 20 in the management apparatus 30, the remote management system 1 described in the present disclosure requires the third authentication information, which is information indicating that the user terminal 20 is in the vicinity of the air conditioner 10, in addition to the first authentication information and the second authentication information. Thus, the above-described operation from a distance or malicious action can be suppressed.

(6-2)
The third authentication information is transmitted from the air conditioner 10 to the user terminal 20 by short-range wireless communication. The management apparatus 30 acquires an encryption key for use in authentication of the third authentication information and performs the authentication to determine whether or not to permit the user terminal 20 to manage the air conditioner 10.

Thus, authentication of the user terminal 20 located far from the air conditioner 10 can be restricted.

Specifically, the management apparatus 30 shares the encryption key with the air conditioner 10. The management apparatus 30 can perform authentication of the third authentication information received from the user terminal 20, by using the encryption key. Since the third authentication information is information indicating that the user terminal 20 is in the vicinity of the air conditioner 10, the management apparatus 30 can restrict authentication of the user terminal 20 located far from the air conditioner 10.

(6-3)
The management apparatus 30 (authentication system 30) stores the second authentication information and information on a management right given to the user terminal 20 in association with each other. The information on the management right given to the user terminal 20 sets a range which the user terminal 20 is permitted to manage.

In response to the management apparatus 30 determining to permit the user terminal 20 to manage the air conditioner 10, the user terminal 20 displays, to the user, the information on the management right given to the user terminal 20.

Thus, the user for whom the management apparatus 30 determines to permit management of the air conditioner 10 can manage the air conditioner 10 from the user terminal 20 in a range indicated by the management right.

(6-4)
In the present disclosure, the vicinity of the air conditioner 10 is a range in which the user terminal 20 is capable of transmitting or receiving a communication signal to or from the air conditioner 10. Alternatively, the vicinity of the air conditioner 10 is a range in which the user terminal 20 is capable of performing short-range wireless communication with the air conditioner 10.

Thus, authentication of the user terminal 20 located far from the air conditioner 10 by a predetermined range or more can be restricted.

(6-5)
A management method described in the present disclosure is a management method in the management apparatus 30 that manages the air conditioner 10 by using the user terminal 20. The management method includes a storing step S1, a sharing step S2, a receiving step S6, an authenticating step S7, and a determining step S8. In the storing step S1, the management apparatus 30 stores first authentication information, second authentication information, an authentication key, and an encryption key. In the sharing step S2, the management apparatus 30 shares the authentication key and the encryption key with the air conditioner 10. In the receiving step S6, the management apparatus 30 receives the first authentication information, the second authentication information, and third authentication information. The third authentication information includes the authentication key encrypted in the air conditioner 10 and time information. In the authenticating step S7, the management apparatus 30 performs authentication of the encrypted authentication key received in the receiving step S6, by using the encryption key stored in the storing step S1. In the determining step S8, the management apparatus 30 determines whether or not to permit the user terminal 20 to manage the air conditioner 10 based on the authenticating step S7. The first authentication information is information related to the air conditioner 10. The second authentication information is information related to the user terminal 20 or information related to a user who uses the user terminal 20. The third authentication information is information indicating that the user terminal 20 is in the vicinity of the air conditioner 10.

Thus, authentication of the user terminal 20 located far from the air conditioner 10 can be restricted so as not to permit such a user terminal 20 to manage the air conditioner 10.

### (7) Modifications

(7-1)
In the remote management system 1 described in the present disclosure, the user terminal 20 and the management apparatus 30 store the terminal information as the second authentication information. However, the user terminal 20 and the management apparatus 30 may store information related to a user who carries the user terminal 20, as the second authentication information.

The information related to a user is, for example, information such as a name, a belonging group, and an identification ID of the user.

In addition, in a case where the information related to a user is stored as the second authentication information, the third authentication information may be information indicating that the user is in the vicinity of the air conditioner 10. In the case where the information related to a user is stored as the second authentication information, information on a management right given to the user and the second authentication information may be stored in association with each other.

Thus, authentication of a user located far from the air conditioner 10 can be restricted so as not to permit such a user to manage the air conditioner 10.

(7-2)
In the remote management system 1 described in the present disclosure, the third authentication information indicates the time of short-range wireless communication performed by the air conditioner 10 and the user terminal 20. However, the third authentication information may indicate a reception time of the authentication information by the management apparatus 30.

(7-3)
In the remote management system 1 described in the present disclosure, the third authentication information includes an authentication key set for each air conditioner 10. However, the authentication key may be set for each user or each user terminal 20.

In addition, the authentication key may be updated every predetermined time. In response to the authentication key being updated, information of the new authentication key is stored in the authentication key management apparatus storage unit 31C. The information of the authentication key stored in the authentication key management apparatus storage unit 31C is shared with the air conditioner 10 or the user terminal 20 via the communication network NW.

(7-4)
In the remote management system 1 described in the present disclosure, the management apparatus 30 (authentication system 30) stores the second authentication information and the information on the management right given to the user terminal 20 in association with each other. However, the management apparatus 30 (authentication system 30) may store the first authentication information and information on a management right for the air conditioner 10 in association with each other. The information on the management right for the air conditioner 10 may set the user or the user terminal 20 permitted to manage the air conditioner 10.

(7-5)
In the remote management system 1 described in the present disclosure, the air conditioner 10 may include a plurality of groups of devices. The information on the management right given to the user or the user terminal 20 may set a group of the devices which the user or the user terminal 20 is permitted to manage among the plurality of groups of the devices.

(7-6)
In the remote management system 1 described in the present disclosure, in a case where the user terminal 20 receives pieces of the authentication information from a plurality of the air conditioners 10 by short-range wireless communication, the user terminal 20 may select the authentication information on the basis of a radio field intensity in the short-range wireless communication.

Thus, for example, the user terminal 20 can be authenticated for the air conditioner 10 that is at a location closest to the user terminal 20.

(7-7)
In the remote management system 1 described in the present disclosure, the short-range wireless communication unit 15 of the air conditioner 10 may transmit, through broadcasting, the various kinds of information such as the device information, the encrypted authentication key, and the time information at predetermined time intervals. The short-range wireless communication unit 23 of the user terminal 20 can receive the various kinds of information transmitted, through broadcasting, from the short-range wireless communication unit 15 of the air conditioner 10.

In addition, in this case, the time information indicates a transmission time of the various kinds of information by the air conditioner 10 to the user terminal 20 through broadcasting. Alternatively, the time information indicates a reception time of the various kinds of information by the user terminal 20 from the air conditioner 10 through broadcasting.

(7-8)
In the remote management system 1 described in the present disclosure, the management apparatus 30 is installed at the central management center 3. However, the management apparatus 30 may be installed in any place such as the facility 2 where the air conditioner 10 is installed, for example.

(7-9)
In the remote management system 1 described in the present disclosure, the management apparatus 30 functions as the authentication system 30. Specifically, the management apparatus 30 acquires, as the authentication information, the first authentication information related to the air conditioner 10, the second authentication information related to the user terminal 20, and the third authentication information indicating that the user terminal 20 is in the vicinity of the air conditioner 10. The management apparatus 30 then performs authentication of the acquired authentication information, and permits the user terminal 20 for which the authentication is successful to manage the air conditioner 10. The management apparatus 30 also stores the second authentication information related to the user terminal 20 and the information on the management right given to the user terminal 20 in association with each other. The information on the management right given to the user terminal 20 sets a range which the user terminal 20 is permitted to manage. In addition, as described in the modification (7-4), the management apparatus 30 can store the first authentication information related to the air conditioner 10 and the information on the management right for the air conditioner 10 in association with each other. The information on the management right for the air conditioner 10 can set the user or the user terminal 20 permitted to manage the air conditioner 10.

However, for example, any of apparatuses other than the management apparatus 30, such as the outdoor unit 11, the indoor unit 12, an accessory device of the air conditioner 10, and the user terminal 20 may function as the authentication system 30. These apparatuses can function as the authentication system 30 by separately implementing the configuration of the management apparatus 30 described in the present disclosure, in addition to the original configuration.

(7-10)
In the remote management system 1 described in the present disclosure, the management apparatus 30 may store information related to a location of the user or the user terminal 20 in the management apparatus storage unit 31, based on the received authentication information. For example, in response to receiving the authentication information from the user terminal 20, the management apparatus 30 stores the information related to the location such as "the user terminal 20 being in the vicinity of the indoor unit 12" in the management apparatus storage unit 31. For example, based on the information related to the location, the management apparatus 30 can grasp an operation log of the user terminal 20 operating the indoor unit 12, and use the operation log for debugging or the like. For example, based on the information related to the location, the management apparatus 30 can perform an analysis of a use frequency of each indoor unit 12, an analysis of a stay time of the user, an analysis of a store visit frequency of the user, and the like. These analyses can be used, for example, for efficient distribution or the like of coupons or advertisements.

### (8) Second Embodiment

A second remote management system according to a second embodiment of the present disclosure will be described below. Note that the embodiment below presents a specific example and does not intend to limit the technical scope, and thus may be appropriately modified within a scope not departing from the gist.

The basic configuration of the second remote management system is substantially the same as that of the remote management system 1 according to the first embodiment. Thus, differences from the remote management system 1 will be mainly described below.

In the second remote management system, the management apparatus 30 and the user terminal 20 share an authentication key and an encryption key, and the management apparatus 30 receives authentication information from the air conditioner 10 and performs authentication of the user terminal 20.

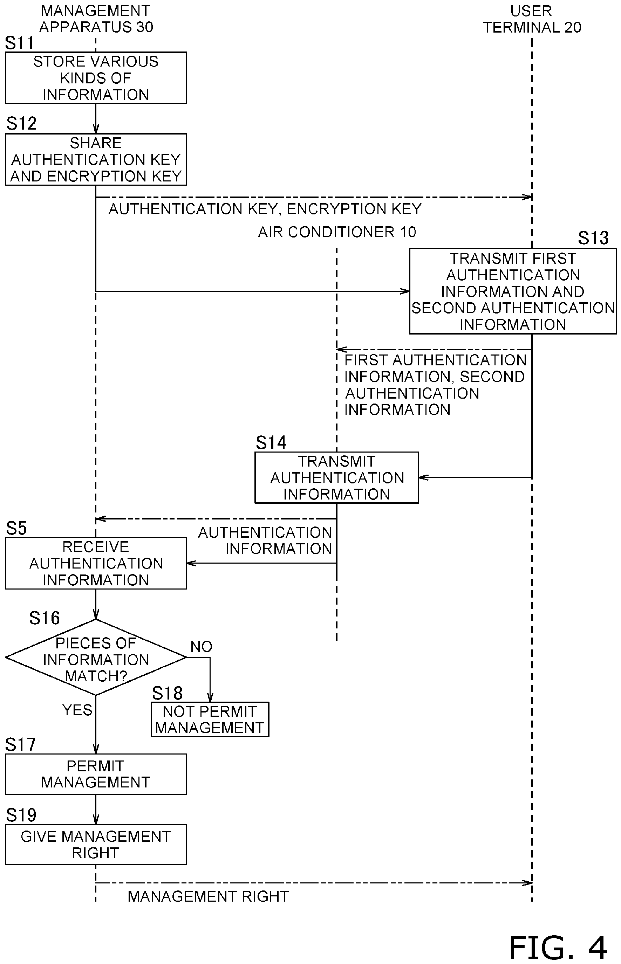

Fig. 4 is a schematic diagram for describing a flow of a process in the second remote management system. Fig. 4 illustrates a flow of the process in terms of a relationship among one air conditioner 10, one user terminal 20, and one management apparatus 30.

In the second remote management system, the air conditioner 10, the user terminal 20, and the management apparatus 30 are all in operation, and the authentication program is executed in each of the air conditioner 10, the user terminal 20, and the management apparatus 30.

The management apparatus 30 stores device information (first authentication information), terminal information (second authentication information), an authentication key, an encryption key, and information on a management right in advance therein (S11). Specifically, the device information management apparatus storage unit 31A of the management apparatus 30 stores the device information (first authentication information) of the air conditioner 10 in advance therein. The terminal information management apparatus storage unit 31B stores the terminal information (second authentication information) of the user terminal 20 therein. The authentication key management apparatus storage unit 31C stores a predetermined character string as the authentication key corresponding to the air conditioner 10 in advance therein. The encryption key management apparatus storage unit 31D stores a predetermined hash function as the encryption key corresponding to the air conditioner 10 in advance therein. The management right management apparatus storage unit 31E stores the information on the management right set for the user terminal 20 in advance therein.

In the second remote management system, the user terminal 20 and the management apparatus 30 communicate with each other via a network, and the management apparatus 30 transmits the authentication key and the encryption key stored therein to the user terminal 20. Consequently, the authentication key and the encryption key are shared by the management apparatus 30 and the user terminal 20 (S12). The user terminal 20 stores the authentication key and the encryption key in the terminal storage unit 21.

The user carries the user terminal 20 and moves to the vicinity of the air conditioner 10 to be operated. The vicinity of the air conditioner 10 is an area where the user terminal 20 can perform short-range wireless communication with the air conditioner 10. In the vicinity of the air conditioner 10, the user terminal 20 transmits, to the air conditioner 10 by short-range wireless communication, terminal information (second authentication information), the authentication key encrypted using the encryption key, and time information of the transmission time of these pieces of information by short-range wireless communication (S13). Herein, the encrypted authentication key and the time information are information (third authentication information) indicating that the user terminal 20 is in the vicinity of the air conditioner 10.

In response to receiving the terminal information (second authentication information) and the information indicating that the user terminal 20 is in the vicinity of the air conditioner 10 (third authentication information), the air conditioner 10 transmits, as authentication information, the received information and the device information (first authentication information) of itself to the management apparatus 30 (S14).

In response to the management apparatus 30 receiving the authentication information from the air conditioner 10 (S15), the management apparatus authentication unit 34 of the management apparatus 30 determines whether or not the various kinds of information stored in the management apparatus storage unit 31 match the information received from the air conditioner 10 (performs authentication) as described above (S16).

In the authentication described above (S16), if the various kinds of information stored in the management apparatus storage unit 31 match the information received from the air conditioner 10, the management apparatus 30 determines to permit the user terminal 20 to manage the air conditioner 10 (S17).

On the other hand, in the authentication described above (S16), if the various kinds of information stored in the management apparatus storage unit 31 do not match the information received from the air conditioner 10, the management apparatus 30 determines not to permit the user terminal 20 to manage the air conditioner 10 (S18).

If determining to permit the user terminal 20 to manage the air conditioner 10 (S17), the management apparatus 30 gives the management right to the user terminal 20, based on the information on the management right stored in the management right management apparatus storage unit 31E (S19).

In response to the management right being given, the user terminal 20 can manage the air conditioner 10 in the range indicated by the management right. For example, in response to inputting control information from the terminal input unit 25, the user terminal 20 can transmit the control information to the air conditioner 10 by short-range wireless communication. The user terminal 20 can also receive the state of the air conditioner 10 or the like by short-range wireless communication and output the state of the air conditioner 10 or the like to the terminal output unit 26.

### (9) Features

The second remote management system includes the air conditioner 10, the user terminal 20, and the management apparatus 30. The air conditioner 10 transmits authentication information to the management apparatus 30. In response to receiving the authentication information, the management apparatus 30 determines whether or not to permit the user or the user terminal 20 to manage the air conditioner 10. The authentication information includes first authentication information, second authentication information, and third authentication information. The first authentication information is information related to the air conditioner 10. The second authentication information is information related to the user or information related to the user terminal 20. The third authentication information is information indicating that the user or the user terminal 20 is in the vicinity of the air conditioner 10.

Thus, authentication of the user terminal 20 located far from the air conditioner 10 can be restricted so as not to permit such a user terminal 20 to manage the air conditioner 10.

(10)
While the embodiments of the present disclosure have been described above, it should be understood that various modifications can be made on the configurations and details without departing from the gist and the scope of the present disclosure that are described in the claims.

### REFERENCE SIGNS LIST

- 1: remote management system
- 10: device
- 20: user terminal
- 30: authentication system, management apparatus
- S1: storing step
- S2: sharing step
- S6: receiving step
- S7: authenticating step
- S8: determining step

### CITATION LIST

### PATENT LITERATURE

PTL 1: Japanese Unexamined Patent Application Publication No. 2015-224858

## Claims

1. An authentication system (30) configured to:
acquire, as authentication information, information related to a device (10), information related to a user or information related to a user terminal (20), and information indicating that the user or the user terminal (20) is in a vicinity of the device (10); and
perform authentication of the acquired authentication information, and permit the user for whom or the user terminal (20) for which the authentication is successful to manage the device (10).

2. The authentication system (30) according to Claim 1, configured to:
store the information related to the device (10) and information on a management right for the device (10) in association with each other, wherein
the information on the management right for the device (10) sets the user or the user terminal (20) permitted to manage the device (10).

3. The authentication system (30) according to Claim 1 or 2, configured to:
store the information related to the user or the user terminal (20) and information on a management right given to the user or the user terminal (20) in association with each other, wherein
the information on the management right given to the user or the user terminal (20) sets a range which the user or the user terminal (20) is permitted to manage.

4. A remote management system (1) comprising:
a device (10); a user terminal (20); and a management apparatus (30), wherein
the device (10) or the user terminal (20) is configured to transmit authentication information to the management apparatus (30),
the management apparatus (30) is configured to determine whether or not to permit the user or the user terminal (20) to manage the device (10), in response to receiving the authentication information, and
the authentication information includes first authentication information related to the device (10), second authentication information related to the user or the user terminal (20), and third authentication information indicating that the user or the user terminal (20) is in a vicinity of the device (10).

5. The remote management system (1) according to Claim 4, wherein
the third authentication information is transmitted from the device (10) to the user terminal (20) by short-range wireless communication, and
the management apparatus (30) is configured to acquire an encryption key for use in authentication of the third authentication information and perform the authentication to determine whether or not to permit the user or the user terminal (20) to manage the device (10).

6. The remote management system (1) according to Claim 4, wherein
the third authentication information is transmitted from the user terminal (20) to the device (10) by short-range wireless communication, and
the management apparatus (30) is configured to acquire an encryption key for use in authentication of the third authentication information and perform the authentication to determine whether or not to permit the user or the user terminal (20) to manage the device (10).

7. The remote management system (1) according to Claim 5 or 6, wherein
the third authentication information includes an authentication key set for each device (10), and
the management apparatus (30) and the device (10) are configured to share the authentication key.

8. The remote management system (1) according to Claim 5 or 6, wherein
the third authentication information includes an authentication key set for each user or each user terminal (20), and
the management apparatus (30) and the user terminal (20) are configured to share the authentication key.

9. The remote management system (1) according to Claim 7 or 8, wherein
the authentication key is updated every predetermined time.

10. The remote management system (1) according to any of Claims 4 to 9, wherein
the third authentication information includes time information that is information on either a time of short-range wireless communication performed by the device (10) and the user terminal (20) or a reception time of the authentication information by the management apparatus (30).

11. The remote management system (1) according to any of Claims 4 to 10, wherein
the management apparatus (30) is configured to store a location of the user or the user terminal (20), based on the received authentication information.

12. The remote management system (1) according to any of Claims 4 to 11, wherein
in a case where the user terminal (20) receives pieces of the authentication information from a plurality of the devices (10) by short-range wireless communication,
the user terminal (20) is configured to select the authentication information, based on a radio field intensity in the short-range wireless communication.

13. The remote management system (1) according to any of Claims 4 to 12, wherein
the management apparatus (30) is configured to store the first authentication information and information on a management right for the device (10) in association with each other, and
the information on the management right for the device (10) sets the user or the user terminal (20) permitted to manage the device (10).

14. The remote management system (1) according to any of Claims 4 to 13, wherein
the management apparatus (30) is configured to store the second authentication information and information on a management right given to the user or the user terminal (20) in association with each other, and
the information on the management right given to the user or the user terminal (20) sets a range which the user or the user terminal (20) is permitted to manage.

15. The remote management system (1) according to Claim 14, wherein
the device (10) includes a plurality of groups of devices, and
the information on the management right given to the user or the user terminal (20) sets a group of the devices (10) which the user or the user terminal (20) is permitted to manage among the plurality of groups of the devices (10).

16. The remote management system (1) according to Claim 14 or 15, wherein
the user terminal (20) is configured to display, to the user, the information on the management right given to the user or the user terminal (20), in response to the management apparatus (30) determining to permit management of the device (10).

17. The remote management system (1) according to any of Claims 4 to 16, wherein
the vicinity of the device (10) is a range in which the user terminal (20) is capable of transmitting or receiving a communication signal to or from the device (10).

18. The remote management system (1) according to any of Claims 4 to 17, wherein
the vicinity of the device (10) is a range in which the user terminal (20) is capable of performing short-range wireless communication with the device (10).

19. A management method in a management apparatus (30) configured to manage a device (10) by using a user terminal (20), the management method comprising:
a storing step (S1) in which the management apparatus (30) stores first authentication information, second authentication information, an authentication key, and an encryption key;
a sharing step (S2) in which the management apparatus (30) shares the authentication key and the encryption key with the device (10);
a receiving step (S6) in which the management apparatus (30) receives the first authentication information, the second authentication information, and third authentication information including the authentication key encrypted in the user terminal (20) or the device (10) and time information;
an authenticating step (S7) in which the management apparatus (30) performs authentication of the encrypted authentication key received in the receiving step (S6), by using the encryption key stored in the storing step (S1); and
a determining step (S8) in which the management apparatus (30) determines whether or not to permit the user terminal (20) to manage the device (10), based on the authenticating step (S7), wherein
the first authentication information is information related to the device (10),
the second authentication information is information related to the user terminal (20) or information related to a user who uses the user terminal (20), and
the third authentication information is information indicating that the user terminal (20) or the user is in a vicinity of the device (10).
